# EUROPEAN PATENT APPLICATION

(11) **EP 2 330 673 A2**
(43) Date of publication of application: **08.06.2011**
(21) Application number: 10191727.6
(22) Date of filing: 18.11.2010
(51) Int. Cl.: H01M 8/24

(54) **Structure for forming a solid oxide fuel cell stack**

(30) Priority: 02.12.2009 US 629118
(71) Applicant: Delphi Technologies, Inc., Troy, MI 48007 (US)
(72) Inventor: Haltiner Jr., Karl Jacob, Fairport, NY 14450 (US); Vordonis, James S., Penfield, NY 14526 (US)
(74) Representative: Denton, Michael John

(57) **Abstract**

A solid oxide fuel cell system (10) comprising a plurality of electrochemically active fuel cell cassettes (14) connected in electrical series and bonded together by a plurality of glass seals to form a fuel cell stack (12). A dummy cassette (26) containing a thermocouple is disposed within the fuel cell stack (12). Each cassette (14) may have at least one alignment tab for receiving a rod (20) to maintain stack alignment during sintering, and each fuel cell cassette (14) has electrical terminals extending from a side of the stack for performance testing. The distribution manifold (16) is attached to stack (12), and a spring subassembly (18) is disposed against the stack (12) and is attached to the manifold (16) by tie rods (20) to maintain a compressive load on the stack (12) through sintering and subsequent use to prevent unloading and rupture of the glass seals.

## Description

### TECHNICAL FIELD

The present invention relates to solid oxide fuel cells; more particularly, to solid oxide fuel cell stacks having features for improving assembly, electrical certification of individual fuel cells, and long-term mechanical integrity; and most particularly, to an improved method and structure for forming a solid oxide fuel cell stack assembly having features for maintaining alignment of cassettes during sintering, for measuring temperatures at various locations within the stack, for measuring voltage performance of each cassette, and for maintaining compressive load on the stack after sintering and subsequent use of the fuel cell stack assembly.

### BACKGROUND OF THE INVENTION

Fuel cells for combining hydrogen and oxygen to produce electricity are well known. A known class of fuel cells includes a solid oxide electrolyte layer through which oxygen anions migrate to combine with hydrogen atoms to produce electricity and water; such fuel cells are referred to in the art as "solid oxide" fuel cells (SOFCs).

In some applications, for example, as an auxiliary power unit (APU) for an automotive vehicle, an SOFC is preferably fueled by "reformate" gas, which is the effluent from a catalytic hydrocarbon oxidizing reformer. Reformate typically includes amounts of carbon monoxide (CO) as fuel in addition to molecular hydrogen. The reforming operation and the fuel cell operation may be considered as first and second oxidative steps, respectively, of the liquid hydrocarbon, resulting ultimately in water and carbon dioxide. Both reactions are exothermic, and both are preferably carried out at relatively high temperatures, for example, in the range of 700°C to 1000°C.

A prior art fuel cell stack assembly includes a plurality of individual fuel cell units known in the art as cassettes or repeating units. Typically, each cassette includes an interconnect which electrically connects the individual fuel cell to the next cassette in the stack to form one half of the fuel cell electric circuit.

In addition, a typical prior art SOFC stack may be based upon a manifold that provides gas-tight attachment to the SOFC stack and distributes the fuel gas and combustion air streams to and from the stack's internal manifolds.

In the prior art, as disclosed for example in US Patent No. 7,001,685, issued February 21, 2006, a fuel cell stack is formed as a standalone unit in a load frame having self-contained spring means for maintaining a compressive load on the stack at all times as required by the sintered glass gas seals between the cassettes. The load frame subassembly is then mounted onto a manifold. A shortcoming of this system is that a bottom plate is required for the load frame, adding to the complexity and cost. Further, the finished height of the stack, and hence the compressive load within, is governed by spacer supports of fixed length within which a leaf spring arrangement is operative. Such supports also add to complexity and cost, and the compressive load will vary by thermal expansion according to the temperature of the stack.

In the prior art, it is also known to provide at least one dummy cassette in a fuel cell stack, as disclosed in Published US Patent Application US 2009/0004532 ("the '532 application"), published January 1, 2009. It is disclosed to include an inoperative dummy cassette in place of a standard cassette at one or both ends of the stack. It has been observed in SOFC stacks formed of planar cassettes that the endmost cells in the stack perform substantially differently from those in the remainder of the stack. Specifically, the end cells typically exhibit 20-40% lower voltage output than do the rest of the cells. Such lower performing cells may limit the operation of the overall stack. For example, it is undesirable to operate a cell below about 0.5 volts for risk of damaging the cell. If the top and bottom cassettes of a stack are operating at 0.5 volts at a current level at which the rest of the cassettes are operating at 0.8 volts, the stack average voltage is well above the desirable average of 0.7 volts. No more current load may be imposed on the stack, which would be desirable to bring the stack average voltage to 0.7, without causing the top and bottom cassettes to operate at less than 0.5 volts. Failure of the top or bottom cassette due to its operating voltage being less than .5 volts can lead to overall stack failure. In the '532 application, the dummy cassette is simply an inert spacer, and no broader use is contemplated in the cited reference.

It is known in the art that maintaining alignment of fuel cell cassettes in a stack is an important requirement. It is further known that when sintering a stack of cassettes having glass seals the cassettes are prone to slipping out of alignment.

Because a single defective fuel cell in a stack can lead to electrical failure of the entire stack, it is desirable to be able to test each fuel cell at will, both during manufacture of the stack and at any time during the working life of the stack.

What is needed in the art is an SOFC assembly wherein the long-term compressive state is reliably and inexpensively maintained; wherein the thermal condition at various points within the fuel cell stack may be monitored at will; wherein the fuel cells are reliably and inexpensively aligned during manufacture; and wherein the electrical performance of each fuel cell in the stack may be tested at will.

It is a principal object of the present invention to improve the manufacturability and working lifetime of a solid oxide fuel cell system.

### SUMMARY OF THE INVENTION

The present invention is related to a solid oxide fuel cell system, comprising a plurality of electrochemically active fuel cell cassettes bonded together by a plurality of seals to form a fuel cell stack ; and at least one dummy cassette containing at least one sensor, said dummy cassette being disposed within said fuel cell stack adjacent at least one of said plurality of said electrochemically active fuel cell cassettes. The seals include a glass. The dummy cassette includes at least one channel for receiving said sensor. The channel is configured so that said sensor can be inserted into said channel through said side of said stack after assembly of said stack. The at least one sensor senses temperature. More precisely it may be a thermocouple and the dummy cassette includes a plurality of thermocouples. The at least one channel for receiving said sensor is disposed in a plane generally transverse of a longitudinal axis of said fuel cell stack .

The solid oxide fuel cell system i further comprises an electrical terminal in electrical communication with at least one of said plurality of electrochemically active fuel cell cassettes, said electrical terminal extending from a side of said fuel cell stack. An electrical testing and monitoring circuit may be connected to said electrical terminal. One of said plurality of electrochemically active fuel cell cassettes includes an assembly alignment tab and the at least one dummy cassette includes an assembly alignment tab. The solid oxide fuel cell assembly may further comprise a distribution manifold attached to a first end of said fuel cell stack and a spring subassembly disposed at a second end of said fuel cell stack, said second end being opposite said first end of said fuel cell stack, and said spring subassembly being attached to said distribution manifold by at least one tie rod. Furthermore, the solid oxide fuel cell system may also comprise a load distribution plate disposed between said spring subassembly and said fuel cell stack. The spring subassembly may include a first and a second leaf springs disposed between said first leaf spring and said load distribution plate and said at least one tie rod attaches said first leaf spring to said distribution manifold.

The invention is also related to a dummy cassette for use in a solid oxide fuel cell stack formed of a plurality of electrochemically active fuel cell cassettes, said dummy cassette comprising a metal plate extending transversely of a longitudinal axis of said stack and having at least one channel formed therein in communication with an edge of said plate for receiving a sensor. The sensor senses temperature and may be a thermocouple. The plate is provided with a plurality of channels and a plurality of said thermocouples disposed in said channels, each thermocouple having an electrical lead extending beyond an edge of said plate. The at least one of said leads extend through a common edge of said plate and said metal plate is a first plate, and further comprises a second plate disposed adjacent a first side of said first plate. The dummy cassette may further comprise a third plate disposed adjacent a second side of said first plate. The dummy cassette is configured in electrical series with said plurality of electrochemically active fuel cell cassettes in said stack.

The invention is also related to an auxiliary power unit comprising a solid oxide fuel cell system made as described in the preceding paragraphs.

### BRIEF DESCRIPTION OF THE DRAWINGS

The present invention will now be described, by way of example, with reference to the accompanying drawings, in which:
FIG. 1 is an isometric view of an SOFC fuel cell system in accordance with the present invention;
FIG. 2 is a plan view of a typical fuel cell cassette for use in the system shown in FIG. 1, showing voltage measurement terminals and sintering alignment tabs; and
FIG. 3 is a plan view of a first plate in a dummy cassette in accordance with the present invention;
FIG. 4 is an exploded isometric view from above of the first plate shown in FIG. 3 and a second plate for a dummy cassette; and
FIG. 5 is an exploded isometric view from below of the first plate shown in FIG. 3 and a third plate for a dummy cassette.

Corresponding reference characters indicate corresponding parts throughout the several views. The exemplifications set out herein illustrate currently preferred embodiments of the invention, and such exemplifications are not to be construed as limiting the scope of the invention in any manner.

### DESCRIPTION OF THE PREFERRED EMBODIMENTS

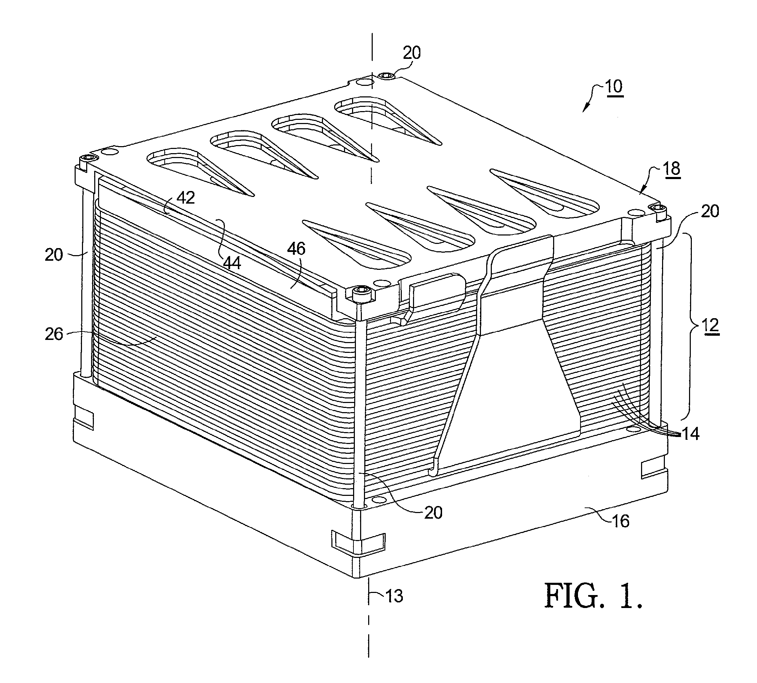

Referring to FIGS. 1 through 5, a solid oxide fuel cell system 10 in accordance with the present invention comprises a stack 12 of fuel cell cassettes 14, each having electrodes and an electrolyte layer as know in the art (also referred to herein as "electrochemically active cell repeating units"), and including at least one electrochemically inactive unit (hereinafter referred to as a "dummy cassette") 26 positioned as described below, stack 12 having a longitudinal axis 13; a distributor manifold 16 supportive of stack 12; and a spring subassembly 18 including tie rods 20 for attaching spring subassembly 18 to distribution manifold 16, thereby binding system 10 together. Assembly alignment tabs 22 and cassette electrical terminals 24 are also present as described below but are not visible in FIG. 1.

In an operating SOFC stack, measuring the gas stream temperatures can be inaccurate and misleading, since there is averaging of gas stream temperature and heat loss from a cell to an adjacent thermocouple. Inserting a thermocouple into an electrochemically active cell unit may affect stack performance, may electrically short adjacent cell repeating units, and may lead to gas leaks. However, knowing the actual cell temperature and temperature distribution at one or more levels of a stack improves understanding of stack operation and can improve stack control.

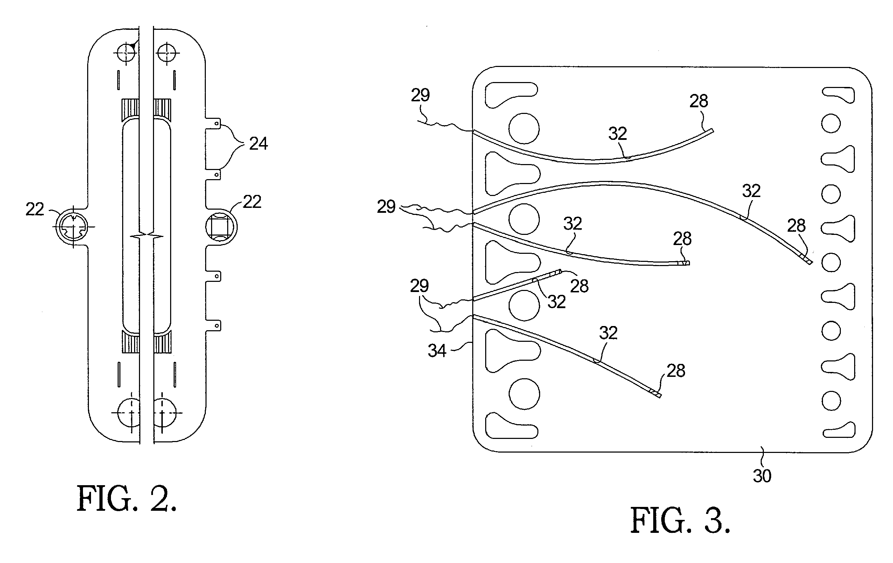

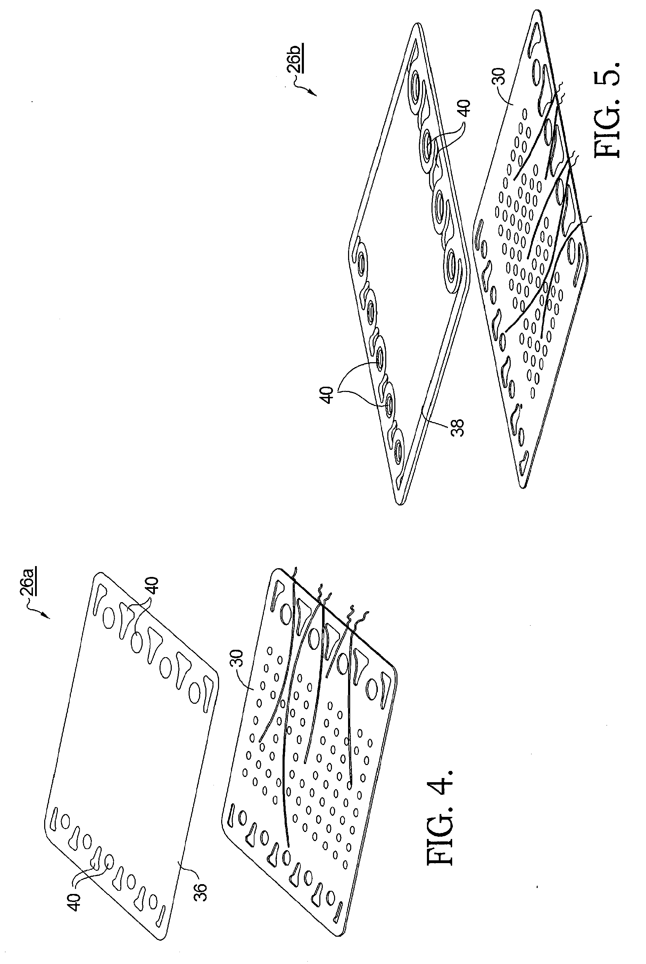

Stack 12 incorporates one or more dummy cassettes 26 (combination of 26a, FIG. 4, and 26b, FIG. 5) that contains one or more sensors 28 (FIG. 3), preferably thermocouples, in a plane transverse of longitudinal axis 13 that is hermetically isolated from the stack gas streams. Dummy cassette 26 passes electrical current from one adjacent electrochemically active cell repeating unit 14 to the other electrochemically active cell repeating unit 14 with minimal voltage loss. The thermocoupled dummy cassette 26 is mostly solid, thin, and metallic so that it has minimal influence on the temperature distribution of adjacent cell repeating units. Since the electrically and thermally conductive faces of the thermocoupled dummy cassette are in very close proximity to the operating cells, the temperatures and temperature distribution across the plane of the thermocoupled dummy cassette are almost exactly the same as in the adjacent active cells. Thus, providing a plurality of sensors 28, such as thermocouples, with their measuring tips at different locations in the plane of dummy cassette 26 affords insight into temperature distributions within the stack during stack design development; and ultimately, one or more thermocouples can be used in a production stack for stack operation feedback for system control purposes.

In one aspect of the invention, thermocoupled dummy cassette 26 (TDC) consists of two or three principal components.

A first or carrier plate 30 is thicker than the sheathed thermocouple 28 and has channels 32 formed into it that locate the thermocouples. One end of each channel is located at the desired measurement point, the other end opens to an edge 34 of plate 30. The channels follow a smooth path from the edge to the measuring point so that the thermocouples can be easily inserted after the TDC plates are joined into an assembly, or replaced if necessary. Sensor leads 29 extend from the ends of channels 32. First plate 30 is substantially solid sheet metal, with the exception of the narrow thermocouple channels, for good electrical and thermal conductivity. A second or upper plate 36 provides an electrical contacting surface and sealing surface to one adjacent active repeating unit above the TDC. In cases where channels 32 are formed through carrier plate 30, a third or lower plate 38 may be used to provide an electrical contacting surface and sealing surface to the other adjacent active repeating unit below the TDC. All three plates 30,36,38 have through-holes 40 that correspond to the gas supply and return chimneys in the active repeating units of stack 12. The two or three plates are metallurgically bonded together (brazed or welded) so that the holes for the gas supply and return chimneys are hermetically sealed; therefore, the gas streams pass through the TDC without leaking into or out of the TDC. The plates are also joined in such a way as to provide a highly electrically conductive path through the TDC. Since the TDC is relatively thin in the vertical or axial (Z) direction, it is a very good thermal conductor in the Z direction, but relatively poor in the X-Y plane; this enables the TDC to accurately reflect the temperature and temperature distribution in the X-Y plane of the adjacent active repeating units.

Stack 12 is assembled on a distribution manifold 16 preferably fabricated by casting from stainless steel (to match the CTE of the stack components) and finish-machined to final dimensions. A dummy cassette 26, is assembled adjacent an electrochemically active cell repeating unit 14 with a glass seal interposed therebetween. The glass seal is the same type as is used between functional electrochemically active cell repeating units 14 in the SOFC stack; the seal contains the fuel gas and air streams between repeating units and provides an adhesive, electrically insulating, mechanical bond between repeating units. The glass seal provides the same gas- tight bond joint between manifold 16 and the first component of the stack which effectively bonds the completed stack to the manifold. Manifold 16 then serves as the build platform for stack 12, a supporting carrier for stack 12 after assembly, and as a mounting interface between stack 12 and the SOFC system hardware. Manifold 16 also provides for a simple gas-tight attachment to the SOFC system plumbing and distributes the fuel gas and air streams to the stack internal manifolds.

During the stack assembly process, the glass seals are added in a green state: unsintered glass particles in an organic binder carrier material. The glass seals, along with the stack assembly, are then subjected to a high temperature sintering process to achieve their final dimension and gas-tight bonding properties. During this process, the seals shrink substantially in thickness and become somewhat liquidous as the organic carrier is destroyed. Therefore the stack assembly shrinks substantially in height, and all the repeating units must be restrained to prevent them from "floating" laterally out of their intended positions. To achieve good locational control of the stack assembly components (active repeating units, dummy cassettes, current collectors, etc.), at least one, and preferably two, assembly alignment tab 22 is added to the exterior perimeter of the components; for example, a first tab with a hole and a second tab with a slot at opposite locations to assure correct orientation of each cassette. Ceramic rods (not shown) are inserted through these features and into a locating hole in a reference element such as the base manifold to provide guiding and locating during the sintering process. The rods may be removed after sintering if desired.

After sintering, stack 12 is tested at elevated temperature to verify proper function of the stack. In order to do so, the voltage of each repeating unit must be measured at open circuit and with electrical load. To accomplish this, each repeating unit 14 is provided with at least one, and preferably two, voltage terminal 24 formed from the metal structure of that unit. For testing, a mating terminal (not shown) is preassembled with a mechanical joint or metallurgical bond to the voltage sensing test equipment, preferably computerized, using high volume wiring harness assembly techniques. The mating terminal is also mechanically joined or metallurgically bonded to voltage terminal 24. A low resistance (particularly at the high operating temperature of the stack) joint between the sensing wire and repeating unit is required for accurate voltage measurement (to 0.01 volt). After stack assembly and test, some or all of the voltage leads may be left in place for stack performance monitoring in the SOFC system during usage thereof.

After sintering, the glass seals provide sturdy bonded joints between the components of the completed stack assembly. However, when stack 12 is cooled to room temperature from its operating temperature of 700°C to 800°C, residual temperature gradient-induced stresses within the components may cause tensile stresses within the glass joints that exceed the tensile strength of the joint. Since the glass seal joints are much stronger in compression than in tension, it is desirable to maintain a compressive load on the SOFC stack (and thus on the seal joints) at all times through the remainder of its life. In the prior art, this was accomplished with an end plate held in place with bolts and torqued to provide a clamping load. However, due to the large difference in coefficient of thermal expansion (CTE) between the SOFC stack operating temperature and room temperature, even a relatively small difference in CTE between the bolts and the stack could result in either an excessively high clamp load or no clamp load at all. To overcome this problem, the present stack assembly is provided with a low profile spring subassembly 18 that provides a continuous compressive load even at SOFC operating temperatures. The present arrangement is simplified considerably over a prior art arrangement disclosed in US Patent No. 7,001,685 and described above. The present arrangement is bolted directly to the distribution manifold rather than to a base plate and comprises first and second leaf springs 42,44 fabricated from metal alloys with high temperature creep resistance that are assembled one on top of the other. Two springs are used to achieve the desired spring rate while keeping the spring stresses below the creep limit. Depending on load and spring rate requirements, one spring may be sufficient or more than two may be required. In any case, the uppermost spring 44 is larger than the footprint of stack 12, and the end is formed, or a stiffener added, to prevent bending perpendicular to the desired bending direction. Tie rods 20 which pass through upper spring 44 and are anchored to distribution manifold 16 and are tensioned to pull the ends of spring 44 to a desired deflection to thereby load the spring assembly. Tie rods 20 may be screws, threaded rod, or headed fixed length rods fabricated from a high temperature metal alloy. Lower spring 42 applies load to a stiff load plate 46 fabricated from a high temperature metal alloy or low cost ceramic (such as alumina or ZTA) to distribute the spring load uniformly over the stack footprint area.

## Claims

1. A solid oxide fuel cell system (10), comprising:
a plurality of electrochemically active fuel cell cassettes (14) bonded together by a plurality of seals to form a fuel cell stack (12); and
at least one dummy cassette (26) containing at least one sensor (28), said dummy cassette (26) being disposed within said fuel cell stack (12) adjacent at least one of said plurality of said electrochemically active fuel cell cassettes (14).

2. A solid oxide fuel cell system (10) in accordance with Claim 1 wherein said seals include a glass.

3. A solid oxide fuel cell system (10) in accordance with any of the preceding claim wherein said dummy cassette (26) includes at least one channel (32) for receiving said sensor (28).

4. A solid oxide fuel cell system (10) in accordance with Claim 3 wherein said channel (32) is configured so that said sensor (28) can be inserted into said channel (32) through said side of said stack (12) after assembly of said stack (12).

5. A solid oxide fuel cell system in accordance with any of the preceding claim wherein said at least one sensor (28) is a thermocouple.

6. A solid oxide fuel cell system (10) in accordance with Claim 5 wherein said dummy cassette (26) includes a plurality of thermocouples.

7. A solid oxide fuel cell system (10) in accordance with Claim 3 wherein said at least one channel (32) for receiving said sensor (28) is disposed in a plane generally transverse of a longitudinal axis of said fuel cell stack (12).

8. A solid oxide fuel cell system (10) in accordance with any of the preceding claim further comprising an electrical terminal in electrical communication with at least one of said plurality of electrochemically active fuel cell cassettes (14), said electrical terminal extending from a side of said fuel cell stack (12).

9. A solid oxide fuel cell system (10) in accordance with Claim 8 further comprising an electrical testing and monitoring circuit connected to said electrical terminal.

10. A solid oxide fuel cell system (10) in accordance any of the preceding claim wherein at least one of said plurality of electrochemically active fuel cell cassettes (14) includes an assembly alignment tab (22).

11. A solid oxide fuel cell system (10) in accordance with any of the preceding claim wherein at least one of said at least one dummy cassette (26) includes an assembly alignment tab (22).

12. A solid oxide fuel cell assembly (10) in accordance with any of the preceding claim further comprising a distribution manifold attached to a first end of said fuel cell stack (12) and a spring subassembly disposed at a second end of said fuel cell stack (12), said second end being opposite said first end of said fuel cell stack, and said spring subassembly being attached to said distribution manifold by at least one tie rod (20).

13. A solid oxide fuel cell system (10) in accordance with Claim 12 further comprising a load distribution plate disposed between said spring subassembly and said fuel cell stack (12).

14. A solid oxide fuel cell system (10) in accordance with Claim 13 wherein said spring subassembly includes first and second leaf springs (42, 44) wherein said second leaf spring is disposed between said first leaf spring and said load distribution plate and said at least one tie rod attaches said first leaf spring to said distribution manifold.

15. An auxiliary power unit comprising a solid oxide fuel cell system in accordance with any of the preceding claim.
